## Europäisches Patentamt

## European Patent Office

## Office européen des brevets

(19)

(11) Numéro de publication: **0 213 026**
**B1**

(12) **FASCICULE DE BREVET EUROPEEN**

(45) Date de publication du fascicule du brevet: **05.12.90**

(51) Int. Cl.⁵: **B 01 J 38/06,** B 01 J 38/48

(21) Numéro de dépôt: **86401685.2**

(22) Date de dépôt: **29.07.86**

(54) Procédé de régéneration d'un catalyseur utilisé dans un procédé d'acoucissement.

(30) Priorité: **13.08.85 FR 8512444**
**07.02.86 FR 8601806**

(43) Date de publication de la demande:
**04.03.87 Bulletin 87/10**

(45) Mention de la délivrance du brevet:
**05.12.90 Bulletin 90/49**

(84) Etats contractants désignés:
**BE DE GB IT NL**

(56) Documents cités:
**EP-A-0 153 833**
**BE-A- 668 037**
**FR-A-1 602 191**
**FR-A-2 338 322**
**US-A-4 141 819**
**US-A-4 337 147**

(73) Titulaire: **INSTITUT FRANCAIS DU PETROLE**
**4, Avenue de Bois-Préau**
**F-92502 Rueil-Malmaison (FR)**

(72) Inventeur: **Mimoun, Hubert**
**34, rue Hippolyte Bisson**
**F-92500 Rueil Malmaison (FR)**
Inventeur: **Saussine, Lucien**
**2, Place des Frères Tissandier**
**F-78290 Croissy-sur-Seine (FR)**
Inventeur: **Bonnaudet, Serge**
**4, rue de Cheroy**
**F-75017 Paris (FR)**
Inventeur: **Robine, Alain**
**10, rue Massena**
**F-92500 Rueil Malmaison (FR)**
Inventeur: **Franck, Jean-Pierre**
**24, avenue Ivan Tourgueneff**
**F-78300 Bougival (FR)**

Courier Press, Leamington Spa, England.

**Description**

La présente invention concerne un procédé de régénération d'un catalyseur utilisé dans un procédé d'adoucissement d'hydrocarbures; par adoucissement, on entend le traitement, de préférence en lit fixe, de charges d'hydrocarbures contenant des produits soufrés malodorants et corrosifs. On provoque ainsi l'oxydation des mercaptans en disulfures par l'air en présence d'au moins un catalyseur déposé sur support et fonctionnant dans des conditions anhydres. Le procédé selon l'invention permet notamment d'éviter la régénération alcaline classique des catalyseurs dans les réactions d'oxydation des mercaptans, ou tout au moins d'espacer considérablement dans le temps de telles rejuvénations alcalines.

On connait la grande application qui est faite industriellement de la propriété que possèdent les chélates de certains métaux de transition tels que le cuivre, le cobalt, le vanadium, le nickel, de catalyser la transformation des mercaptans en disulfures en présence d'oxygène atmosphérique. Cette propriété est mise en oeuvre, par exemple en présence de la phtalocyanine de cobalt sulfonée, pour adoucir, en phase liquide aquo-alcaline, les gaz liquéfiés, les essences naturelles ou de craquage, les naphtas ou les solvants de toute composition. Un tel procédé est décrit par exemple dans les brevets US 2,966,453, US 2,882,224, US 2,988,500 selon lesquels la solution alcaline contenant par exemple comme catalyseur une phtalocyanine de cobalt sulfonée sert à extraire les mercaptans du carburant et à les oxyder en disulfures par l'air en phase aqueuse.

Il est également possible de procéder à cet adoucissement en utilisant un catalyseur d'oxydation fixé sur un support insoluble dans la soude et les hydrocarbures. Un tel procédé est décrit par exemple dans les brevets français 1.301.844 ou US 2.988.500 selon lesquels la charge hydrocarbonée est mise en contact avec un lit fixe de phtalocyanine de cobalt sur charbon actif, en présence d'air et d'un réactif aquo alcalin.

Bien que ces procédés soient largennent utilisés dans l'industrie du raffinage pétrolier, ils présentent l'inconvénient majeur de consommer de grandes quantités de solution aqueuse de soude laquelle se retrouve polluée au cours de l'opération d'adoucissement par des produits divers tels que les acides naphténiques, les phénols, l'hydrogène sulfuré, les produits azotés, etc... Le recyclage de ces solutions de soude polluées est une opération difficile, et leur élimination pose des problèmes écologiques pour l'environnement.

Un autre inconvénient lié à l'utilisation de tels procédés tient à la désactivation rapide du catalyseur que l'on compense par des rejuvénations fréquentes à la soude aqueuse, et moins fréquemment, par une régénération par lavage à l'eau chaude permettant d'entraîner les naphtenates et phenates alcalins qui empoisonnent le catalyseur. Ceci est décrit, par exemple dans les brevets US 3.148.156 et US 4.009.120. Cette désactivation rapide peut être palliée par l'utilisation d'activateurs tels que des bases azotées (brevets US 4.100.057, US 4.168.245) ou de sels d'ammonium quaternaires (brevets US 4.159.964, US 4.124.493, US 4.121.997, US 4.157.312 et US 4.206.079), mais l'utilisation de ces activateurs coûteux que l'on retrouve dans les charges adoucies grève l'économie de ces procédés.

Un autre inconvénient de l'utilisation de tels procédés est lié à la nécessité de séparer, à la sortie du réacteur d'adoucissement, la charge hydrocarbonée de la solution activatrice de soude aqueuse. Il est également nécessaire de procéder à un séchage de la charge adoucie sur un filtre à sel afin de réduire le plus possible la teneur en eau dans les hydrocarbures, et d'éliminer les risques de décantation dans les réservoirs, et de gel par temps froid.

On a maintenant découvert une nouvelle procédure de régénération du catalyseur qui permet d'éviter les inconvénients sus-désignés en augmentant considérablement l'activité et la stabilité des catalyseurs supportés d'adoucissement.

L'invention concerne ainsi un procédé de régénération d'un catalyseur utilisé dans un procédé d'adoucissement d'une charge d'hydrocarbures contenant des produits soufrés, en présence d'un catalyseur supporté, le catalyseur étant choisi dans le groupe constitué par les phtalocyanines de cobalt mono ou polysulfonées déposées sur un support, les phtalocyanines de cobalt tetra ou octa carboxylées déposées sur un support, les tetraphenylporphyrines de cobalt sulfonées déposées sur un support, et les corrines de cobalt sulfonées déposées sur un support, le procédé d'adoucissement consistant à imprégner préalablement le catalyseur supporté par une solution alcoolique sensiblement anhydre renfermant au moins un agent alcalin choisi dans le groupe constitué par la soude, la potasse, l'hydroxyde de lithium et l'ammoniac, la teneur en alcali, dans les catalyseurs supportés, étant comprise entre 0,1 et 10% en poids, le procédé de régénération du catalyseur étant caractérisé en ce que il s'effectue en lavant le catalyseur à l'eau chaude ou à la vapeur d'eau, puis en traitant le catalyseur par une solution alcoolique sensiblement anhydre d'au moins un agent alcalin.

Lorsque la charge adoucie à la sortie du réacteur a une teneur en mercaptan dépassant celle requise par les spécifications, on procède à la régénération du catalyseur en effectuant d'abord un lavage à l'eau chaude (température de lavage comprise entre 60 et 100°C) ou à la vapeur d'eau jusqu'à l'obtention d'effluents incolores, afin de débarrasser le catalyseur des impuretés accumulées contenues dans la charge. On procède ensuite à une réimprégnation du catalyseur ainsi lavé par une solution alcoolique d'alcali.

La charge est alors à nouveau percolée en présence d'air sur le catalyseur ainsi régénéré.

Une telle procédure permet d'éviter l'utilisation de solutions aqueuses de soude pour régénérer le catalyseur, et donc de supprimer les opérations de décantation et de séchage liées à l'utilisation de telles solutions de soude aqueuse. Elle permet en outre de réduire considérablement la consommation en alcali du procédé, et par là même de supprimer les problèmes d'élimination et de recyclage des solutions aqueuses de soude.

La procédure de régénération selon l'invention permet d'améliorer considérablement l'activité et la durée de vie de certains catalyseurs d'adoucissement supportés connus. De tels catalyseurs sont notamment comme indiqué plus haut, les phtalocyanines de cobalt mono ou polysulfonées déposées sur charbon actif décrites par exemple dans le brevet US 3,108,081, les tetraphenylporphyrines de cobalt sulfonées déposées sur charbon (actif de préférence) (brevet US 2,966,453), les corrines de cobalt sulfonées déposées sur charbon actif (brevet US 3,252,892).

Comme support solide des chelates ou complexes utilisables dans la réaction d'adoucissement, on peut utiliser le charbon actif de préférence, mais également tout autre support approprié tel que les silices, les alumines, les silices-alumines, les alumino silicates, les zéolithes, les terres activées, les résines échangeuses de cation, parmi lesquelles on citera à titre d'exemple l'Amberlite A.15 ($RSO_3H$) ou IRC 50 (R-COOH).

La solution alcaline alcoolique de régénération peut contenir une base telle que, par exemple la soude, la potasse, l'hydroxyde de lithium, l'ammoniac en solution dans un alcool primaire ou secondaire tel que, par exemple, le méthanol, l'éthanol, le n-propanol, l'isopropanol, les butanols normaux ou ramifiés, les pentanols, les hexanols, l'éthyl-2-hexanol. Il est impératif que la solution alcoolique soit sensiblement anhydre et non aqueuse comme enseigné dans le brevet belge BE-A-668.037.

La température d'imprégnation est comprise entre 20 et 80°C de préférence entre 20 et 50°C. Le catalyseur et son support imprégnés par la solution alcoolique alcaline a une teneur en alcali comprise entre 0,1 et 10% poids, de préférence entre 1 et 5% poids.

L'adoucissement est réalisé par percolation de la fraction pétrolière en présence d'oxygène ou d'air sur un lit catalytique de support contenant sous forme supportée le complexe métallique décrit ci-dessus. Aucune addition d'alcali tel que la soude aqueuse, la potasse ou l'ammoniaque n'est nécessaire après l'imprégnation ou la régénération du catalyseur supporté par une solution alcoolique d'alcali. Le présent procédé permet ainsi, de manière avantageuse par rapport aux procédés classiques, d'éviter l'emploi d'un décanteur, d'un filtre à sel et d'une pompe à soude ou tout autre composé alcalin.

Dans la mise en oeuvre de la réaction d'adoucissement, la température de réaction n'a pas un effet critique. On peut opérer à température ambiante, mais il est également possible d'opérer à des températures plus élevées, sans toutefois dépasser des températures de l'ordre de 120°C. D'autre part, la pression requise est généralement comprise entre environ 0,5 et 50 bars, et de préférence entre 1 et 30 bars environ. L'air est l'agent oxydant le plus approprié. Tout autre agent oxydant, tel que l'oxygène à l'état pur, est également utilisable de même que tout autre gaz ou mélange de gaz contenant de l'oxygène. Ce dernier peut être introduit dans le réacteur en quantités stoéchiométriques. Il est parfois préférable de l'utiliser en excès.

Les charges utilisées dans la présente invention peuvent inclure des kerosènes renfermant jusqu'à 750 ppm environ de soufre mercaptan.

Les exemples suivants illustrent de façon non limitative la mise en oeuvre du procédé selon la présente invention:

### Exemple 1 (comparatif)

On prépare, conformément aux techniques de l'art antérieur, un catalyseur supporté en percolant sur charbon actif une solution de phtalocyanine de cobalt sulfonée dans une solution aqueuse contenant 3% d'ammoniaque. Le catalyseur obtenu contient 0,15% poids de cobalt et 4% poids d'ammonium. L'adoucissement d'un kérosène est réalisé comme suit:

La charge à adoucir est placée dans un réservoir qui alimente un réacteur avec un appoint d'air. Les conditions opératoires de la réaction sont les suivantes:

volume de catalyseur = 20 cm$^3$

pression = 1 atmosphère

température = 20°C

vitesse spatiale horaire de la charge (VVH) = 1 litre/litre catalyseur/heure.

Une fois traité dans le réacteur, l'effluent est séparé de l'air qu'il contient dans un séparateur. On effectue alors un dosage de mercaptan résiduel qualitativement par un "doctor test" (plombite de sodium et fleur de soufre) et quantitativement par potentiométrie toutes les 24 heures.

La charge à adoucir est constituée par un kérosène (160—300°C) contenant 700 ppm de soufre total et 150 ppm de soufre mercaptan. Elle est percolée en présence d'air directement sur le catalyseur supporté. Au bout de 100 heures, la teneur en mercaptan du kérosène adouci dépasse les 10 ppm. On peut donc évaluer la durée de vie de ce catalyseur à seulement 100 heures environ.

### Exemple 2 (comparatif)

On répète l'exemple 1 en remplaçant la solution aqueuse contenant 3% d'ammoniaque par une solution aqueuse contenant 3% de soude. Le catalyseur renferme ainsi, en poids, 0,15% de cobalt et 4% de soude. On obtient sensiblement les mêmes résultats que dans l'exemple 1.

### Exemple 3

On prépare un catalyseur supporté en percolant sur charbon actif une solution de phtalocyanine de cobalt sulfonée dans du méthanol pur, donc anhydre, contenant 5% de soude. Le catalyseur obtenu après lavage au pentane et séchage à l'air contient 0,15% poids de cobalt et 4% poids de soude.

L'adoucissement d'un kérosène est réalisé dans les mêmes conditions et avec la même charge que dans l'exemple 1 (20°C, pression atmosphérique, 20 cm³ de catalyseur supporté sur charbon actif, VVH = 1, kérosène contenant 150 ppm de soufre mercaptan).

On ne procède ici à aucune injection de soude.

On recueille à la sortie du réacteur un kérosène adouci contenant moins de 10 ppm de soufre mercaptan pendant 1700 heures de marche. Au cours de cet essai, 34 litres de kérosène ont été adoucis par 20 cm³ de catalyseur. Cet essai montre que l'imprégnation du charbon par une solution alcoolique alcaline anhydre de phtalocyanine de cobalt sulfonée conduit à un catalyseur supporté dont la durée de vie est considérablement accrue par rapport à celle d'un même catalyseur préparé en milieu aqueux.

Après avoir adouci le kérosène pendant 1700 heures, le catalyseur désactivé est lavé à l'eau chaude à 80°C jusqu'à obtention d'effluents incolores, puis réimprégné par une solution méthanolique de soude à 5% poids. On procède alors à l'adoucissement d'une même charge de kérosène dans les mêmes conditions. La nouvelle durée de vie au cours de laquelle la charge adoucie a une teneur en soufre mercaptan inférieure à 10 ppm est de 1600 heures.

A noter l'intérêt également de l'invention puisque une régénération du catalyseur supporté n'intervient qu'au bout de 1600 heures et non pas toutes les 100 heures comme ce serait le cas dans l'exemple comparatif N° 1, d'où une économie non négligeable des solutions aqueuses alcalines nécessaires à la régénération du catalyseur.

Exemple 4

On utilise le catalyseur supporté préparé dans l'exemple 3 pour adoucir une charge industrielle composée d'un mélange 50/50 (en volume) d'essence légère et d'essence lourde issue d'un craqueur catalytique.

Cette charge, dont la densité à 15°C est de 0,779 contient 34% de composés aromatiques, 27% d'oléfines et 39% d'hydrocarbures saturés. Elle contient en outre 800 ppm de phenols, 400 ppm de soufre mercaptan et 2000 ppm de soufre total.

Les conditions opératoires sont les suivantes:
volume du catalyseur = 20 cm³
pression relative = 0,5 bar
température = 30°C
volume d'air/g RSH = 2Nl/g
VVH = 1,5

L'essence est adoucie pendant 1400 heures, durant lesquelles la teneur en mercaptan est inférieure à 5 ppm. A ce stade, on peut régénérer le catalyseur comme indiqué à l'exemple 3 et poursuivre ensuite l'adoucissement d'une charge industrielle.

Exemple 5

On a pu aussi constater, ce qui à priori était loin d'être évident, que l'invention s'applique étonnamment bien à des races de kérosène très riches en mercaptan, renfermant jusqu'à 750 ppm de soufre mercaptan.

Dans les deux tests A et B de l'exemple 5 suivant, on traite un kérosène Kirkouk renfermant 340 ppm de soufre mercaptan. On verra que dans le test comparatif A, le kérosène adouci renferme, dès 24 heures de marche, 18 ppm en mercaptan, alors que dans le test B, le kérosène adouci ne renferme que 10 ppm à peine de mercaptan au bout de 900 heures de traitement.

On prépare un catalyseur supporté en percolant sur charbon actif une solution de phtalocyanine de cobalt sulfonée dans une solution aqueuse contenant 5% de soude. Le catalyseur obtenu contient 0,04% poids de cobalt et 4% poids de soude. On effectue le traitement d'un kérosène très riche en mercaptan (et donc particulièrement difficile à adoucir) dans les conditions suivantes:
Volume de catalyseur : 200 cm³
Pression d'air : 7 bars
Température : 40°C
Vitesse spatiale horaire de la charge (VVH) = 1 1/1 catalyseur/heure
Charge : Kérosène Kirkouk (120—250°C) contenant 2200 ppm de soufre total et 340 ppm de soufre mercaptan, et dont le taux d'acide naphténique est de 0,037 mg KOH/g de kérosène.

Test A (comparatif)

On procède à la percolation de la charge dans les conditions ci-dessus sur le lit fixe de catalyseur préalablement imprégné par 200 cm³ de soude aqueuse à 7%. On constate que la charge adoucie contient 18 ppm de soufre mercaptan après 24 heures de marche, puis 25 ppm de RSH après 48 heures de marche. Ces teneurs en RSH étant bien supérieures aux valeurs requises par les spécifications des kérosènes pour carburéacteurs, on en déduit que la charge Kirkouk ne peut être adoucie selon la procédure classique.

Test B

On percole sur le lit fixe de catalyseurs préparé selon la méthode ci-dessus 200 cm³ de soude méthanolique à 5% pendant 1 heure. Après essorage du catalyseur, on procède à la percolation de la même charge kérosène dans les conditions ci-dessus, sans procéder à aucune injection de soude.

On recueille à la sortie du réacteur un kérosène adouci contenant moins de 10 ppm de soufre mercaptan pendant 900 heures de marche.

Cet essai montre que l'imprégnation du charbon par une solution alkaline alcoolique conduit à un catalyseur dont l'activité et la durée de vie sont considérablement accrus par rapport à une activation par la soude aqueuse.

Après avoir adouci le kérosène pendant 900 heures, on procède à une régénération consistant en une nouvelle percolation sur le catalyseur supporté de 200 cm³ de soude méthanolique à 5% dans les mêmes conditions que ci-dessus. La nouvelle durée de vie au cours de laquelle la charge adoucie a une teneur en soufre mercaptan inférieure à 10 ppm est de 800 heures. La régénération du catalyseur par la soude méthanolique peut être réalisée autant de fois que l'on veut sans perte de stabilité du catalyseur.

## Revendications

1. Procédé de régénération d'un catalyseur utilisé dans un procédé d'adoucissement d'une charge d'hydrocarbures contenant des produits soufrés, en présence d'un catalyseur supporté, le catalyseur étant choisi dans le groupe constitué par les phtalocyanines de cobalt mono ou polysulfonées déposées sur un support, les phtalocyanines de cobalt tetra ou octa carboxylées déposées sur un support, les tetraphenylporphyrines de cobalt sulfonées déposées sur un support, et les corrines de cobalt sulfonées déposées sur un support, le procédé d'adoucissement consistant à imprégner préalablement le catalyseur supporté par une solution alcoolique sensiblement anhydre renfermant au moins un agent alcalin choisi dans le groupe constitué par la soude, la potasse, l'hydroxyde de lithium et l'ammoniac, la teneur en alcali, dans les catalyseurs supportés, étant comprise entre 0,1 et 10% en poids, le procédé de régénération du catalyseur étant caractérisé en ce que il s'effectue en lavant le catalyseur à l'eau chaude ou à la vapeur d'eau, puis en traitant le catalyseur par une solution alcoolique sensiblement anhydre d'au moins un agent alcalin.

2. Procédé selon la revendication 1 dans lequel la solution alcoolique est une solution dans un alcool.

3. Procédé selon la revendication 2 dans lequel l'alcool est un alcool primaire ou secondaire.

4. Procédé selon la revendication 3 dans lequel l'alcool est choisi dans le groupe constitué par le méthanol, l'éthanol, le n-propanol, l'isopropanol, les butanols, les pentanols, les hexanols et l'éthyl-2-hexanol.

5. Procédé selon l'une des revendications 1 à 4, dans lequel le catalyseur, après imprégnation par le milieu alcoolique anhydre, contenant un agent alcalin, est séché avant utilisation pour l'adoucissement.

## Patentansprüche

1. Verfahren zur Regenerierung eines Katalysators, der in einer Entschwefelung einer Schwefelprodukte enthaltenden Kohlenwasserstoffcharge benützt wird in Gegenwart eines auf einem Träger aufgebrachten Katalysators, ausgewählt aus der Gruppe bestehend aus auf einem Träger aufgebrachten mono- oder polysulfonierten Cobaltphthalocyaninen, auf einem Träger aufgebrachten tetraoder octacarboxylierten Cobaltphthalocyaninen, auf einem Träger aufgebrachten sulfonierten Tetraphenylporphyrinen und auf einem Träger aufgebrachten sulfonierten Cobaltcorrinverbindungen, wobei das Entschwefelungsverfahren darin besteht, den auf einem Träger aufgebrachten Katalysator zuvor zu imprägnieren mit einer praktisch wasserfreien alkoholischen Lösung, die mindestens ein alkalisches Mittel, ausgewählt aus der Gruppe bestehend aus Natronlauge Kalilauge, Lithiumhydroxid und Ammoniak, aufweist, wobei der Gehalt an Alkali in den auf Trägermaterialien aufgebrachten Katalysatoren zwischen 0,1 und 10 Gew.-% beträgt, dadurch gekennzeichnet, daß das Verfahren zur Regenierung des Katalysators bewirkt wird durch Waschen des Katalysators mit heißem Wasser oder mit Wasserdampf und anschließende Behandlung des Katalysators mit einer praktisch wasserfreien alkoholischen Lösung mindestens eines alkalischen Mittels.

2. Verfahren nach Anspruch 1, bei dem die alkoholische Lösung eine Lösung in einem Alkohol ist.

3. Verfahren nach Anspruch 2, bei dem der Alkohol ein primärer oder sekundärer Alkohol ist.

4. Verfahren nach Anspruch 3, bei dem der Alkohol ausgewählt ist aus der Gruppe bestehend aus Methanol, Ethanol, n-Propanol, Isopropanol, Butanolen, Pentanolen, Hexanolen und 2-Ethylhexanol.

5. Verfahren nach einem der Ansprüche 1 bis 4, bei dem der Katalysator nach der Imprägnierung mit dem wasserfreien alkoholischen Medium, das ein alkalisches Mittel enthält, getrocknet wird vor dessen Verwendung zur Entschwefelung.

## Claims

1. A process for the regeneration of a catalyst used in a sweetening process of a hydrocarbon charge containing sulfur compounds in the presence of a supported catalyst, the catalyst being selected from the group consisting of mono- or poly-sulfonated cobalt phthalocyanines deposited on a carrier, tetra- or octa-carboxylated cobalt phthalocyanines deposited on a carrier, sulfonated cobalt tetraphenylporphyrines deposited on a carrier and sulfonated cobalt corrines deposited on a carrier, said process consisting of previously impregnating the supported catalyst with a substantially anhydrous alcoholic solution containing at least one alkaline agent selected from the group consisting of sodium hydroxide, potassium hydroxide, lithium hydroxide and ammonia, the alkali content of the supported catalysts ranging from 01 to 10% by weight, the regeneration process being characterized in that it is carried out by washing the catalyst with hot water or steam and then by treating the catalyst with a substantially anhydrous alcoholic solution of at least one alkaline agent.

2. A process according to claim 1, wherein said alcoholic solution is a solution in an alcohol.

3. A process according to claim 2, wherein said alcohol is a primary or secondary alcohol.

4. A process according to claim 3, wherein the alcohol is selected from the group consisting of methanol, ethanol, n-propanol, isopropanol, butanol, pentanols, hexanols and 2-ethyl-hexanol.

5. A process according to one of claims 1 to 4, wherein the catalyst, after impregnation by the anhydrous alcoholic medium containing an alkaline agent, is dried before use in sweetening process.